# EUROPÄISCHE PATENTANMELDUNG

(11) **EP 1 253 177 A2**
(43) Veröffentlichungstag der Anmeldung: **30.10.2002**
(21) Anmeldenummer: 02008977.7
(22) Anmeldetag: 23.04.2002
(51) Int. Cl.: C09J 7/04, B05B 15/04

(54) **Dehnbares Abdeckklebeband**

(30) Priorität: 25.04.2001 DE 10120148
(71) Anmelder: Tesa AG, 20253 Hamburg (DE)
(72) Erfinder: Grittner, Norbert, 22527 Hamburg (DE); Hirsch, Ralf, 25451 Quickborn (DE); Knolle, Herbert, 21465 Reinbek (DE)

(57) **Zusammenfassung**

Abdeckklebeband aus einem Trägermaterial und einer darauf zumindest einseitig aufgebrachten Klebebeschichtung, dadurch gekennzeichnet, daß das Trägermaterial aus einem ungekreppten bahnförmigen Material besteht, dessen Reißdehnung durch mechanisches Prägen auf einen Wert zwischen 2 und 70 % eingestellt worden ist.

## Beschreibung

Die vorliegende Erfindung betrifft ein dehnbares Abdeckklebeband aus einem ungekreppten bahnförmigen Material.

Selbstklebende Abdeckbänder, im folgenden als Abdeckklebeband bezeichnet, müssen einige wesentliche Eigenschaften aufweisen, damit sie die besonderen an sie gestellten Anforderungen erfüllen. Dies sind - ohne daß diese Aufstellung den Anspruch auf Vollständigkeit erhebt - eine geringe Dicke, eine hohe Zugfestigkeit (Höchstzugkraft), eine gute Dehnbarkeit (Reißdehnung), eine ausreichende aber nicht zu hohe Klebkraft, die rückstandsfreie Wiederablösbarkeit nach den Beanspruchungen der eigentlichen Anwendung, die gute Haftung von Anstrichstoffen auf der Rückseite, die Beständigkeit gegenüber Farbdurchschlag, die Beständigkeit gegenüber Feuchtigkeit und eine dosierte Klebkraft auf der eigenen Rückseite.
Während einige der Eigenschaften auf die Klebmasse oder andere Funktionsschichten des Abdeckklebebands zurückzuführen sind, so basieren die Dehnbarkeit und die Zugfestigkeit wesentlich auf den physikalischen Eigenschaften des verwendeten Trägermaterials.

Deshalb werden für Abdeckklebebänder bevorzugt Papierträger und dann solche eingesetzt, die durch die Art des verwendeten Zellstoffes, den Mahlgrad und bestimmte chemische Hilfsmittel eine definierte Zugfestigkeit und durch besondere Verfahrensschritte wie der Kreppung oder das Clupak-Verfahren mit einer definierten Dehnbarkeit ausgestattet sind. Diese Rohstoffe und Verfahrensschritte sind ausschließlich der Kunst des Papiermachers überlassen und stehen dem Hersteller von Abdeckklebebändern daher nicht zur Verfügung, da dieser im Regelfall das Rohpapier als Basis der Abdeckklebebands zukauft.

Insbesondere die Dehnbarkeit ist aber eine unverzichtbare Eigenschaft von Abdeckklebebändern. Denn sie ermöglicht erst die vollflächige und faltenfreie Verklebung in Kurven und auf sphärischen Oberflächen, wie sie zum Beispiel bei der Reparaturlackierung von Pkws notwendig ist; das Abdeckklebeband kann bei der Handapplikation weichen Konturen perfekt nachgeführt werden und führt so zu einer sauberen, unterläuferfreien Farbkante. Die dafür erforderliche Dehnung liegt bei sogenannten Flachkrepps im Bereich von 10 %, bei sogenannten Hochkrepps um 50 %. Zugfestigkeit und Dehnung sind so aufeinander abgestimmt, daß es problemlos gelingt, während der manuellen Applikation an der Außenkurve des Abdeckklebebands einen Teil der Dehnung ohne Rißgefahr herauszuziehen und dadurch eine Kurve zu erzeugen.

Im folgenden soll auf die nach dem Stand der Technik üblichen Prozesse zur Herstellung von dehnfähigen bahnförmigen Papierträgern eingegangen werden.
Für Abdeckklebebänder werden üblicherweise als Trägermaterial maschinell gekreppte Papiere eingesetzt, die in der Regel aus 100 % Natronkraft-Zellstoff (NBSK) hergestellt werden. Im sogenannten Naßkrepp-Verfahren erfolgt die Kreppung meistens auf der Papiermaschine mit Hilfe eines Kreppschabers auf einem sogenannten Kreppzylinder entweder innerhalb bzw. am Ende der Pressenpartie oder auf einem der darauf folgenden Zylinder der Trockenpartie. Dabei wird durch Stauchung der noch feuchten und labilen Papierbahn an der Vorderkante des Kreppschabers eine Mikrofaltung des Papiers erzeugt. Dieser sehr sensible Verfahrensschritt begrenzt im allgemeinen die maximal mögliche Geschwindigkeit der Papiermaschine und verkürzt die Länge der Papierbahn um ca. 10 bis 20 %. Die Falten werden beim anschließenden Trocknungsprozeß in wesentlichen durch Ausbildung von Wasserstoffbrückenbindungen fixiert, so daß sie bei mäßiger mechanischer Beanspruchung des Papiers in Längsrichtung - wie sie zum Beispiel beim Abrollen und Ablängen eines Abdeckklebebands auftritt - stabil bleiben. Die Stabilität kann durch Zugabe von Leimungsmitteln noch erhöht, und so dem jeweiligen Anwendungszweck angepaßt werden. Sie wird üblicherweise durch Messen des Kraft-Dehnungs-Diagramms bestimmt. Nach diesem Verfahren lassen sich sogenannte Flachkrepps mit Reißdehnungswerten von bis zu 20 % erzeugen.

Ein weiteres Verfahren zur Herstellung von dehnbaren Papierträgern für Abdeckklebebänder ist das sogenannte CLUPAK-Verfahren. Dabei werden die Fasern im glatten Papier durch Friktion mit Hilfe eines sich entspannenden Gummituches oder gummibezogener Walzen in der Papierbahnebene gestaucht beziehungsweise gekräuselt. Man erhält so ein dehnfähiges Papier, dessen gekräuselte Fasern bei Zugbeanspruchung wieder gestreckt werden. Eine Mikrofaltung wie oben beschrieben ist nicht erkennbar; das Papier erscheint glatt und ist deshalb nicht als Krepp-Papier im eigentlichen Sinne anzusehen. Charakteristisch für die nach diesem Verfahren hergestellten Papiere ist eine bereits bei geringen Dehnungen sehr hohe Zugkraft, die im Bereich der Reißdehnung nur noch geringfügig ansteigt. Eine Anschmiegsamkeit von aus solchen Papieren hergestellten Abdeckklebebands an sphärische Oberflächen ist bei manueller Applikation deshalb kaum gegeben. Außerdem wird das Papier bedingt durch das Verfahren in z-Richtung stark verdichtet und nimmt deshalb während der in der Abdeckklebeband-Herstellung üblichen Imprägnierung nur schlecht Dispersionen auf. Üblicherweise werden deshalb für Abdeckklebebands geleimte Clupak-Träger ohne Imprägnierung eingesetzt. Die erzielten Dehnungen liegen ebenfalls bei bis zu 20 %. Zu diesem Verfahren und dem daraus hergestellten Produkt sei auf die DE 38 35 507 verwiesen.

Für die Erzielung sehr hoher Dehnwerte von bis zu etwa 50 % wird im allgemeinen das Trockenkreppverfahren angewendet. Dabei wird ein glattes Papier auf einer separaten Maschine nach Wiederanfeuchten mit einer Bindemittellösung (Stärke, CMC, PVAI) wie oben beschrieben gekreppt und anschließend erneut getrocknet. Man erhält sogenannte Hochkrepps, die sich neben der extremen Dehnfähigkeit durch eine große Dicke und eine sehr rauhe Oberfläche auszeichnen.

Diese bahnförmigen Papierträger bestimmen durch ihre Eigenschaften nicht nur die späteren Anwendungseigenschaften des Abdeckklebebands maßgeblich, sondern diese Eigenschaften sind auch kennzeichnend für und teilweise einschränkend bei der Herstellung derselben.

Aufgabe der Erfindung ist es, ein Abdeckklebeband mit einem Trägermaterial zur Verfügung zu stellen, wobei das Trägermaterial unabhängig vom Prozeß der Papierherstellung mit einer definierten Dehnbarkeit ausgestattet und die Dehnbarkeit in Betrag und Charakter so eingestellt ist, daß es den vorgesehenen Anforderungen in besonderem Maße gerecht wird.

Gelöst wird diese Aufgabe durch ein Abdeckklebeband, wie es im Hauptanspruch niedergelegt ist. Gegenstand der Unteransprüche sind vorteilhafte Weiterbildungen des Erfindungsgegenstands. Des weiteren umfaßt die Erfindung Verfahren zur Herstellung desselben.

Demgemäß betrifft die Erfindung ein Abdeckklebeband aus einem Trägermaterial und einer darauf zumindest einseitig aufgebrachten Klebebeschichtung. Das Trägermaterial besteht aus einem ungekreppten bahnförmigen Material, vorzugsweise aus Papier, dessen Reißdehnung durch mechanisches Prägen auf einen Wert zwischen 2 und 70 % eingestellt worden ist.

Die Rauhtiefe des geprägten Trägermaterials ist in einer ersten vorteilhaften Ausführungsform durch eine Kalandrierung reduziert, ohne die Dehnung des Trägermaterials wesentlich zu beeinträchtigen.

Eine charakteristische Größe eines Trägermaterials, insbesondere Papierträgers, im Sinne der vorliegenden Erfindung ist die Reißdehnung (RD). Sie wird üblicherweise als Endpunkt des Kraft-Dehnungsdiagrammes bei der Zugprüfung des Prüfstreifens ermittelt und in % bezogen auf die Ursprungslänge angegeben. Eine hohe RD ist unerläßlich bei der faltenfreien Kurvenverklebung von Abdeckklebebändern und bei der Verklebung auf sphärischen Untergründen. In diesen Fällen darf sich das Abdeckklebeband weder teilweise vom Untergrund lösen, noch an den gedehnten Kanten einreißen, da das zu Farbunterläufern beziehungsweise zum Reißen beim Demaskieren führen würde.

Dann umfaßt die Erfindung ein Verfahren zur Herstellung eines Abdeckklebebands, wobei das Trägermaterial zunächst imprägniert wird,
das imprägnierte Trägermaterial getrocknet wird,
das imprägnierte und getrocknete Trägermaterial geprägt wird,
gegebenenfalls Trennlack und Primer zumindest einseitig auf das Trägermaterial
aufgebracht werden und
das Trägermaterial zumindest einseitig mit einer Klebebeschichtung versehen wird.

In einer vorteilhaften Ausführungsform des Verfahrens findet zwischen Prägung und Aufbringen der Klebebeschichtung eine Kalandrierung des Trägermaterials statt.

Weiterhin vorzugsweise erfolgt die Prägung durch ein Walzenpaar, wobei mindestens eine Walze ein fest eingearbeitetes dreidimensionales Profil trägt, das in der anderen Walze sich entweder durch den Andruck selbsttätig abformt oder auf der anderen Walze als Negativprofil eingearbeitet worden ist.

Die Prägung kann durch ein Walzenpaar erfolgen, dessen Prägespalt stufenlos einstellbar ist und durch den die Prägetiefe und damit die Dehnung der Papierbahn einstellbar ist.

Weiterhin kann die Prägung durch ein Walzenpaar erfolgen, wobei entweder das imprägnierte Trägermaterial oder mindestens eine der Prägewalzen und/oder mindestens eine der Kalanderwalzen auf eine Temperatur verschieden von der Umgebungstemperatur temperiert wird.

Das erfindungsgemäße Abdeckklebeband mit seinem Trägermaterial ist in der Lage, die aus dem Stand der Technik bekannten Nachteile durch Verwendung von Krepp-Papieren zur Herstellung von Abdeckklebebändern zu vermeiden.
Anstelle gekreppter Rohpapiere werden bei der Herstellung dieser Abdeckklebebänder ungekreppte Rohpapiere eingesetzt. Solche Rohpapiere sind auf dem Markt in besonders vielfältiger Auswahl verfügbar und im Vergleich zu gekreppten Papieren sehr preisgünstig, da sie in sehr großen Breiten auf schnellaufenden Maschinen hergestellt werden.

Am Anfang des Prozesses steht der Schritt der Papierherstellung, der hier nicht näher erläutert werden soll und als bekannt vorausgesetzt werden kann.

Diese ungekreppten Papiere werden im nächsten Schritt des Herstellverfahrens in konventioneller Weise imprägniert. Dabei besteht im Gegensatz zur Verwendung gekreppter Papiere nicht die Gefahr des Herausziehens der Krepp-Struktur und damit des Verlustes von Dehnung durch die Bahnzüge, die im Prozeß notwendig sind, um das durch das Imprägniermittel durchweichte Papier auf einer kontinuierlich arbeitenden Maschine zu verarbeiten. Es kann also bei prozeßtechnisch vorteilhaften höheren Bahnzügen und somit ggf. auch höheren Bahngeschwindigkeiten gearbeitet werden. Anschließend erfolgt die definierte und kontrollierte Prägung des Papiers insbesondere durch ein Walzenpaar. In diesem Schritt wird eine bleibende Dehnung durch innere Verstreckung des imprägnierten Papiers und/oder Faltung im Walzenspalt erzeugt, wobei die Struktur und Tiefe der Prägung weitgehend frei wählbar sind. Im Gegensatz zur sensiblen Kreppstruktur gekreppter Rohpapiere ist die so erzeugte Struktur und Dehnbarkeit bereits durch das Imprägniermittel fixiert und kann in den folgenden Prozeßschritten besonders einfach und ohne Verlust von Reißdehnung verarbeitet werden.
Wenn gewünscht, kann anschließend in einem Kalandrierschritt die Oberfläche geglättet und die Dicke des geprägten Papiers reduziert werden, ohne daß dabei die eingebrachte Dehnung wesentlich reduziert wird.
Schließlich folgen gegebenenfalls, wie aus dem Stand der Technik bekannt, das Aufbringen von Trennlack und Primer, bevor das nun fertig ausgerüstete Papier mit Klebmasse beschichtet und zu Rollen konfektioniert werden kann.

Das fertige Abdeckklebeband weist durch den oben beschriebenen Aufbau eine beabsichtigte, charakteristische Besonderheit auf. Es ist dies die genau definierte Prägestruktur des Papierträgers. Sie wird besonders vorteilhaft durch das Prägewalzen-Paar erzeugt und kann daher durch dessen Oberflächenprofil exakt vorgegeben und durch die Prägetiefe weiter beeinflußt werden. Im Prägedesign sind Nachbildungen natürlicher Strukturen ebenso möglich wie geometrische Muster. Jedes Muster hat sein eigenes Erscheinungsbild und verursacht ein charakteristisches Dehnverhalten. So wie die funktionelle Gestaltung zur Erhöhung der Dehnung im Vordergrund stehen kann, so sind auch die dekorative oder kennzeichnende Prägung und die möglichen Kombinationen daraus denkbare und zweckmäßige Ausprägungen der Erfindung.

Läßt man dem Prägeschritt den optionalen Kalandriervorgang folgen, so ist es möglich, dadurch ohne wesentlichen Verlust an Dehnung die Dicke des geprägten Papierträgers erheblich zu reduzieren. Dadurch kann der Vorteil der Verwendung des relativ dünnen, ungekreppten Rohpapiers zur Erzeugung einer flachen und regelmäßigen Lackkante voll genutzt werden. Gleichzeitig kann dadurch der zur Erzeugung einer geschlossenen Lackschicht notwendige Lackauftrag deutlich reduziert werden.

Dieser Vorteil wird auch bei der Klebmassenbeschichtung erzielt. Durch die Glätte des geprägten und kalandrierten Papierträgers erhöht sich umgekehrt bei gleichem Klebmasseauftrag die erreichbare Verklebungsfestigkeit. Ein weiterer Vorteil bei der Verwendung eines Abdeckklebebands mit geprägtem und kalandriertem Träger besteht in der Verbesserten Fingerfreundlichkeit der Abdeckklebeband-Rückseite. Insbesondere bei regelmäßiger manueller Applikation schont ein glattes Trägermaterial die Fingerspitzen der Anwender erheblich.

## Patentansprüche

1. Abdeckklebeband aus einem Trägermaterial und einer darauf zumindest einseitig aufgebrachten Klebebeschichtung, **dadurch gekennzeichnet, daß** das Trägermaterial aus einem ungekreppten bahnförmigen Material besteht, dessen Reißdehnung durch mechanisches Prägen auf einen Wert zwischen 2 und 70 % eingestellt worden ist.

2. Abdeckklebeband nach Anspruch 1, **dadurch gekennzeichnet, daß** das Trägermaterial ein Papierträger ist.

3. Abdeckklebeband nach den Ansprüchen 1 und 2, **dadurch gekennzeichnet, daß** die Rauhtiefe des geprägten Trägermaterials durch eine Kalandrierung reduziert ist, ohne die Dehnung des Trägermaterials wesentlich zu beeinträchtigen.

4. Verfahren zur Herstellung eines Abdeckklebebands gemäß einem der vorhergehenden Ansprüche, wobei
das Trägermaterial zunächst imprägniert wird,
das imprägnierte Trägermaterial getrocknet wird,
das imprägnierte und getrocknete Trägermaterial geprägt wird,
gegebenenfalls Trennlack und Primer zumindest einseitig auf das Trägermaterial
aufgebracht werden und
das Trägermaterial zumindest einseitig mit einer Klebebeschichtung versehen wird.

5. Verfahren gemäß Anspruch 4, **dadurch gekennzeichnet, daß**
zwischen Prägung und Aufbringen der Klebebeschichtung eine Kalandrierung des Trägermaterials stattfindet.

6. Verfahren gemäß den Ansprüchen 4 und 5, **dadurch gekennzeichnet, daß**
die Prägung durch ein Walzenpaar erfolgt, wobei mindestens eine Walze ein fest eingearbeitetes dreidimensionales Profil trägt, das in der anderen Walze sich entweder durch den Andruck selbsttätig abformt oder auf der anderen Walze als Negativprofil eingearbeitet worden ist.

7. Verfahren gemäß den Ansprüchen 4 bis 6, **dadurch gekennzeichnet, daß**
die Prägung durch ein Walzenpaar erfolgt, dessen Prägespalt stufenlos einstellbar ist und durch den die Prägetiefe und damit die Dehnung der Papierbahn einstellbar ist.

8. Verfahren gemäß den Ansprüchen 4 bis 6, **dadurch gekennzeichnet, daß**
die Prägung durch ein Walzenpaar erfolgt, wobei entweder das imprägnierte Trägermaterial oder mindestens eine der Prägewalzen und/oder mindestens eine der Kalanderwalzen auf eine Temperatur verschieden von der Umgebungstemperatur temperiert wird.
